# EUROPEAN PATENT APPLICATION

(11) **EP 0 695 784 A2**
(43) Date of publication of application: **07.02.1996**
(21) Application number: 95305385.7
(22) Date of filing: 01.08.1995
(51) Int. Cl.: C08L 67/02, A43B 23/17

(54) **Shoe stiffener**

(30) Priority: 02.08.1994 GB 9415557
(71) Applicant: Chamberlain Vinyl Products Limited, Syston, Leicester LE7 1PD (GB)
(72) Inventor: Boden, David Edward,, Enderby, Leicestershire LE9 5NF (GB)
(74) Representative: Jones, Stephen Anthony

(57) **Abstract**

There are described a material suitable for use as a shoe stiffener, and a method for the manufacture of the same. The material comprises an extruded plastics sheet containing a polyester and a thermoplastic resin, and optionally a small proportion of an additional component to improve the mechanical properties. The sheet may be extruded directly onto a fabric substrate which may then be impregnated with a suitable impregnant.

## Description

This invention relates to a material suitable for use as a shoe stiffener.

Stiffener materials, typically comprising a fabric base coated or impregnated with plastics, are well known and widely used in the manufacture of shoes and other footwear. Generally, they are produced in sheet form from which pieces are cut for use as stiffeners in the heel or toe part of the shoe. The materials are usually thermoplastic so that cut pieces can be deformed under the influence of heat and then retain their shape.

Thermoplastic stiffener materials can be produced in various ways. For example, the coating or impregnating material may be applied to the fabric base in the form of a dispersion, solution or melt. Stiffening sheets may also be formed by laminating thin sheets onto fabric substrates. Polymers which have been used as impregnants include vinyl polymers such as polystyrene.

More recently, stiffening materials have been proposed which are prepared by applying a mixture of a binder and a filler in powder form to the surface of a fabric, and then applying heat to melt the powder.

To date, no entirely satisfactory stiffening material for use in shoe manufacture has been developed.

There has now been devised an improved form of stiffening material for use in the manufacture of shoes, which overcomes or substantially mitigates disadvantages associated with known forms of such material.

According to the invention there is provided a material suitable for use as a shoe stiffener, comprising an extruded plastics sheet comprising a mixture of a polyester and a thermoplastic resin.

The material according to the invention is advantageous primarily in that the polyester renders the material adhesive at low application temperatures, typically of 70°c or so, whilst the thermoplastic resin renders the material flexible and resilient.

According to a further aspect of the invention, there is provided a method of preparing a material suitable for use as a shoe stiffener, which method comprises extruding a plastic sheet comprising a mixture of a polyester and a thermoplastic resin.

The plastic sheet may be extruded onto a fabric substrate, which is subsequently impregnated with a suitable impregnant. Thus, according to a more specific aspect of the invention there is provided a laminated material, suitable for use as a shoe stiffener, comprising an impregnated fabric laminated with a plastics sheet comprising a mixture of a polyester and a thermoplastic resin.

Similarly, there is provided a method of preparing a laminated material, suitable for use as a shoe stiffener, which method comprises the steps of
a) extruding a plastic sheet comprising a mixture of a polyester and a thermoplastic resin onto a fabric substrate, and
b) impregnating the fabric substrate with a suitable impregnant.

The thermoplastic resin is preferably the material commercially available under the trade mark SURLYN, a registered trade mark of E I du Pont de Nemours and Company. This material is fully described as an ionic copolymer selected from the class consisting of polymers of α-olefins having the general formula RCH=CH₂ where R is a radical selected from the class consisting of hydrogen and alkyl radicals having from 1 to 8 carbons atoms, the olefin content of the polymer being at least 50 mol percent, based on the polymer, and an α,β-ethylenically unsaturated monocarboxylic acid, the acid monomer content of the polymer being from 0.2 to 25 mol percent, based on the polymer, the monomer-carboxylic acid polymer containing uniformly distributed through the polymer a metal ion having a valence of 1 to 3 inclusive, and polymers of said olefin content and a α,β-ethylenically unsaturated dicarboxylic acid, the acid content of the polymer being from 0.2 to 25 mol percent based on the polymer, the dicarboxylic acid copolymer containing uniformly distributed throughout the polymer a monovalent metal ion, in which at least 10% of the carboxylic acid groups of the monovalent and divalent carboxylic acid polymers are neutralized by the metal ions.

SURLYN material is available in various grades, and the resilience or hardness of the laminated material may be modified by appropriate choice of grade.

The thermoplastic resin may also be a blend of SURLYN with another polymer, eg ethylene vinylacetate.

The thermoplastic resin may be recycled scrap material, eg skeletal scrap from the toe puff department of a shoe factory.

Such scrap material will have any fibre backing removed and is then granulated prior to mixing with the other components and extrusion.

The polyester is preferably a linear polyester, most preferably a saturated linear polyester. One suitable polyester is that sold under the trade name HM5512AE (Bostik Ltd, Leicester LE4 6BW, England). Other suitable polyesters include polycaprolactones. Suitable polycaprolactones are available from Solvay Interox.

The proportion of thermoplastic resin in the plastic sheet may vary between 20% and 80%, more preferably between 40% and 60% by weight.

To improve the mechanical properties of the stiffening material, it may be necessary or desirable to incorporate a small proportion of an additional component as plasticizer. Such an additional component is preferably present at less than 10% by weight, eg in the range 2 to 10%, more preferably 2 to 7%, eg about 5% by weight.

Suitable plasticizing components include elastic polyurethanes, in particular linear aromatic polyurethanes with a high crystallization speed and high thermoplasticity level. Most preferably, such polyurethanes have reactivation temperatures in the range 60-75°C. An example of a suitable polyurethane is that sold under the trade name Pearlstick 104 (Merquinsa, Gran Vial 17, 08160 Montmelo, Spain).

Most preferably, the stiffening material is prepared by mixing together the various components in granular, powder or other particulate form, tumbling or otherwise agitating to produce a reasonably homogeneous mixture, heating to elevated temperature (say 150 to 200°C) and extruding the molten mixture.

The plastic sheet may be extruded to a thickness of between 0.5mm and 1.5mm, most preferably 0.7mm to 1.1mm. The plastic sheet may be extruded with a variety of thicknesses, eg thicknesses in the above range, depending on the application for which the stiffening material is intended. Extrusion onto a fabric preferably takes place directly, the fabric most preferably being a non-woven fabric, eg a polyester non-woven fabric.

After extrusion of the plastic sheet onto the fabric, the fabric may be impregnated with a suitable impregnant. A wide range of impregnants may be used, including various impregnants conventionally used for shoe stiffening materials. If a very hard stiffener is required then an impregnant rich in polystyrene may be used. On the other hand, if a more resilient stiffener is required then a rubber rich impregnant may be used.

The extruded laminated material may be further laminated to a suitable lining material, or may be coated with an adhesive, eg an ethylenevinylacetate adhesive, on one or both sides for insertion into a pocket.

The material prepared in accordance with the invention may be cut to shape and formed into components for use in shoe manufacture using conventional equipment.

The invention will now be described in greater detail, by way of illustration only, with reference to the following Example.

### Example

| | |
|---|---|
| Polyester (HM5512AE) | 55% w/w |
| Thermoplastic resin (SURLYN) | 40% |
| Polyurethane (PEARLSTICK 104) | 5% |

The polyester in powder form and granules of the other two components were mixed in the above proportions and tumbled for homogenisation. The mixture was heated to 180°C and extruded into sheets with thicknesses of from 0.7mm to 1.1mm.

The sheet may optionally be extruded directly onto a non-woven fabric substrate, and optionally subsequently coated with adhesive. The sheets are then cut to suitable shapes for use as shoe stiffeners.

## Claims

1. A material suitable for use as a shoe stiffener, comprising an extruded plastics sheet comprising a mixture of a polyester and a thermoplastic resin.

2. A material as claimed in Claim 1, wherein the thermoplastic resin is an ionic copolymer selected from the class consisting of polymers of α-olefins having the general formula RCH=CH₂ where R is a radical selected from the class consisting of hydrogen and alkyl radicals having from 1 to 8 carbons atoms, the olefin content of the polymer being at least 50 mol percent, based on the polymer, and an α,β-ethylenically unsaturated monocarboxylic acid, the acid monomer content of the polymer being from 0.2 to 25 mol percent, based on the polymer, the monomer-carboxylic acid polymer containing uniformly distributed through the polymer a metal ion having a valence of 1 to 3 inclusive, and polymers of said olefin content and a α,β-ethylenically unsaturated dicarboxylic acid, the acid content of the polymer being from 0.2 to 25 mol percent based on the polymer, the dicarboxylic acid copolymer containing uniformly distributed throughout the polymer a monovalent metal ion, in which at least 10% of the carboxylic acid groups of the monovalent and divalent carboxylic acid polymers are neutralized by the metal ions.

3. A material as claimed in any preceding claim, wherein the polyester is a saturated linear polyester.

4. A material as claimed in any preceding claim, wherein the proportion of thermoplastic resin in the plastic sheet is between 40% and 60% by weight.

5. A material as claimed in any preceding claim, which further comprises 2 to 10% by weight of an additional component to act as a plasticizer.

6. A material as claimed in Claim 10, wherein the plasticizer is an elastic polyurethane.

7. A material as claimed in any preceding claim, which has a thickness in the range 0.5mm and 1.5mm.

8. A material as claimed in any preceding claim, which is laminated with an impregnated fabric.

9. A method of preparing a material according to Claim 1, which method comprises extruding a plastic sheet comprising a mixture of a polyester and a thermoplastic resin.

10. A method as claimed in Claim 9, wherein the plastic sheet is extruded onto a fabric substrate.

11. A method as claimed in Claim 10, wherein the fabric substrate is subsequently impregnated with an impregnant.

12. A method as claimed in Claim 9, which comprises mixing together the various components in granular, powder or other particulate form, tumbling or otherwise agitating to produce a homogeneous mixture, heating to elevated temperature and extruding the molten mixture.
